# EUROPEAN PATENT SPECIFICATION

(11) **EP 2 790 362 B1**
(45) Date of publication and mention of the grant of the patent: **25.07.2018**
(21) Application number: 12865297.1
(22) Date of filing: 13.12.2012
(51) Int. Cl.: H04L 12/803, H04L 29/08

(54) **NETWORK LOAD CONTROL METHOD AND REGISTRATION SERVER**
NETZWERKBELASTUNGSSTEUERUNGSVERFAHREN UND REGISTRIERUNGSSERVER
PROCÉDÉ POUR LA RÉGULATION D'UNE CHARGE SUR UN RÉSEAU ET SERVEUR D'ENREGISTREMENT

(30) Priority: 11.01.2012 CN 201210007024
(43) Date of publication of application: 15.10.2014
(73) Proprietor: ZTE Corporation, Shenzhen, Guangdong 518057 (CN)
(72) Inventor: TAO, Quanjun, Shenzhen Guangdong 518057 (CN); WANG, Wei, Shenzhen Guangdong 518057 (CN); WU, Jianhua, Shenzhen Guangdong 518057 (CN)
(74) Representative: Schröer, Gernot H.
(86) International application number: PCT/CN2012/086560
(87) International publication number: WO 2013/104231

(56) References cited:
- EP-A1- 1 841 141
- WO-A1-2010/049378
- CN-A- 1 614 928
- CN-A- 101 262 369
- CN-A- 101 686 172
- CN-A- 101 729 390
- US-A1- 2006 212 584
- US-A1- 2008 107 122
- US-A1- 2010 064 008

## Description

### Technical Field

The present document relates to the field of communication, and more specifically, to a network load control method and a registration server.

### Background of the Invention

Currently, peer-to-peer (P2P) has fully demonstrated its strong technological advantages in file exchange, distributed computing, service sharing, and other aspects, however, the P2P applications mainly focus on Internet applications, and have not been used in large scale in conventional telecommunication networks yet. Given the fact that the mainstream of session control is SIP (Session Initial Protocol) in the present and future telecommunications networks, the introduction of the P2P technology into the telecommunication network must be able to guarantee the applications of the SIP in the P2P networks, meanwhile, all kinds of typical services should be able to run.

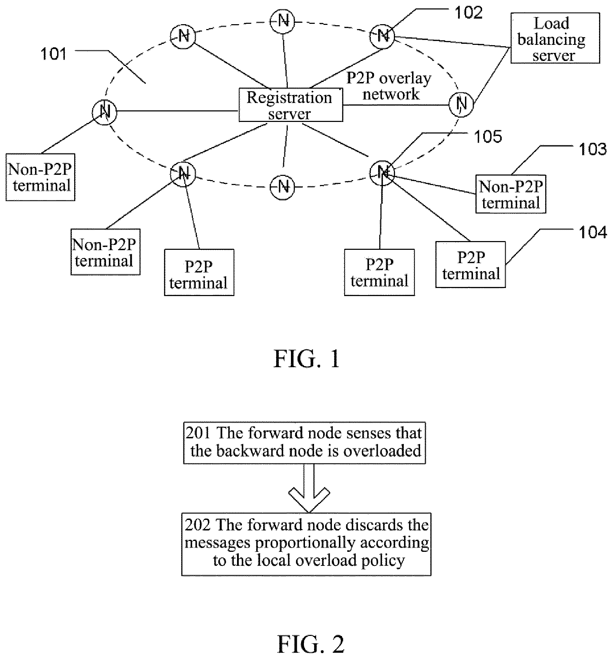

Based on the above considerations, currently many organizations in the industry are committed to studying how to introduce the P2P technology into the telecommunication networks, and FIG. 1 is an architectural diagram of a P2P core network in the related art, wherein:
P2P overlay network 101 is a logical network consisting of various types of peers (also called nodes) playing different roles.

Peer node 102 in the P2P overlay network is a basic component in the P2P overlay network, and it is a node that is able to provide storage and delivery services for other nodes in the same P2P overlay network.

Non-P2P terminal device 103 is a terminal device that accesses to the P2P overlay network and only supports the SIP protocol rather than any P2P protocol.

P2P terminal device 104 is a terminal device that accesses to the P2P overlay network and supports both the P2P protocol and the IP protocol; considering that the capability of a general terminal device, in particular a hand-held terminal device, is weak, in many cases, the P2P terminal device works only as a P2P client accessing to the P2P overlay network in an actual deployment, and it does not undertake server functions such as storage, transmission, etc.

Access node 105 is an access node of terminal devices such as the non-P2P terminal device 103 and the P2P terminal device 104, taking the telecommunications operator's needs into account, both the P2P and non-P2P terminals must access to the P2P overlay network via a nearby access node, when the access node works as a non-P2P terminal's access node, it works as a proxy node at the same time, and is responsible for converting the SIP protocol used by the non-P2P terminal to the protocol used as the internal routing SIP in the P2P overlay network, and when the node works as a P2P terminal's access node, it only needs to relay the messages.

Registration server 106 is responsible for managing network nodes joining the P2P network, and assigning node identifiers to the nodes joining the P2P network.

Load balancing server 107 is responsible for collecting the nodes' loads in the P2P network.

In the P2P overlay network, the dynamic real-time data backup between the P2P nodes 102 can be achieved based on the distributed hash table (DHT) algorithm.

FIG. 2 is a schematic diagram of overload control in a traditional network, wherein, a forward node is a message sender, and a backward node is a message receiver, when the forward node senses that the backward node is overloaded, the forward node proportionally discards or sends messages to the backward node according to a overload strategy, and the specific process is as follows:
In Step 201, the forward node senses that the backward node is overloaded; The method for the forward node sensing the backward node's load generally comprises: the backward node informing, the load balancing server informing, deducing based on the message delay, and so on.

In Step 202, based on the overload degree of the backward node, the forward node discards the load according to a predetermined proportion or sends a message to the backward node based on the overload policy, so as to reduce the backward node's load.

If the abovementioned overload control method in the traditional network is applied to the P2P network, the advantages of P2P networks cannot be reflected, instead it can increase an instability of the P2P networks, the P2P network's advantages are exchanging the quantity for high-quality, and a single node's stability is worse than that of a single-node in the traditional network, when the network operates with a heavy load, it is easier to form resource overload, which, according to the traditional control overload method, results in that a connection rate of the P2P network is much lower than that of the traditional network, in the case of heavy load.

US 2008/0107122 A discloses a method for a new node joining the network. The P2P network of this document comprises a plurality of nodes and a new node. Each of the nodes has its own partner list. Each of the partner lists records nodes that are able to provide data to the owner of the partner list.

When the new node intends to join the network, each of the nodes of the network decides whether to accept the new node according to the number of its partners.

US2006/212584 A1 discloses a method and system for accelerating downloading and displaying of content in web pages in a peer-to-peer network.

CN101262369 A discloses the main and standby realization method of scheduling servers.

US2010/064008 A1 discloses a P2P network system.

### Summary of the Invention

The embodiment of the present document provides a network load control method and a registration server to achieve load control in a P2P network without reducing the P2P network's connection rate.

The above object is achieved by a network overload control method according to claim 1 and a registration server according to claim 6. Further improvements and embodiments are provided in the dependent claims.

In accordance with an embodiment of the present document, the method comprises:
after acquiring that a target area is overloaded, a registration server adding a node into the target area.

Preferably, adding the node into the target area, comprises:
the registration server calling a standby node, and adding the standby node into the target area, or selecting a node from a network area outside the target area, and adding the selected node into the target area.

Preferably, adding the standby node into the target area, comprises:
the registration server waking up the standby node, and assigning a node identifier to the standby node after receiving a network join request message sent by the standby node, and the assigned node identifier making the standby node share with the target area bearers in an address space of the target area after the standby node joins the network, so as to decompose a load in the target area.

Preferably, selecting a node from a network area outside of the target area, and adding the selected node into the target area, comprises:
the registration server selecting from a network area outside of the target area one or more nodes whose loads are less than a reference load in the target area, or selecting one or more nodes whose loads are less than a first load threshold;
the registration server notifying the selected node to re-join the network, and after receiving the network join request message sent by the selected node, assigning the node identifier to the selected node, and the assigned node identifier making the selected node share with the target area the bearers in the address space of the target area after the selected node joins the network, so as to decompose the load in the target area.

Preferably, when the target area comprises a plurality of the nodes, the reference load is an average load or a minimum load of the nodes in the target area; when the target area contains one node, the reference load is a load of that node.

Preferably, the standby node is in an idle or dormant state, monitors a wake-up from the registration server, and after hearing a wake-up from the registration server, enters into a working state, and sends the registration server a network join request message.

Preferably, the step of the registration server acquiring that the target area is overloaded, comprises:
a load control node judging whether the load in the target area is higher than a second load threshold, if yes, determining that a load adjustment needs to be initiated, and sending a load adjustment request to the registration server; or
when the load control node and the registration server are jointly arranged, the registration server sensing the load in the target area, and judging whether the load in the target area is higher than the second load threshold.

Preferably, the target area contains one or more nodes, and the load control node notifies the registration server of the node identifiers of the nodes contained in the target area in the load adjustment request.

Preferably, ways for the load control node notifying the registration server of the node identifiers of the nodes contained in the target area in the load adjustment request comprise one or more of the following, comprising: the load control node recording the node identifier of a single node in the load adjustment request;
the load control node recording a node identifier range in the load adjustment request, wherein the node identifier range represents one node or a plurality of nodes with consecutive node identifiers.

Preferably, when two end node identifiers in tandem in the node identifier range are the same, it is indicated that nodes to which the end node identifiers point are a same one.

Preferably, the load control node is a node that is currently in service, or a load balancing server, or a functional unit arranged in the registration server.

The embodiment of the present document also provides another network load control method, comprising:
when a registration server acquires that a load in a target area is lower than a third threshold load, the registration server selecting a node in the target area and making the selected node exit from the target area.

Preferably, making the selected node exit from the target area, comprises: the registration server notifying the selected node to turn back into a standby node.

Preferably, the standby node is in an idle or dormant state, and monitors wake-up from the registration server, and after hearing a wake-up from the registration server, enters into a working state, and sends the registration server a network join request message.

A registration server in accordance with an embodiment of the present document, comprises: a load monitoring unit and a load control unit, wherein:
the load monitoring unit is configured to monitor a load in a target area;
the load control unit is configured to, after the load monitoring unit acquires that the target area is overloaded, add a node into the target area.
Preferably, the load control unit is configured to call a standby node, and add the standby node into the target area, or select a node from a network area outside the target area, and add the selected node into the target area.

Preferably, the load control unit comprises: a node management subunit and an identifier assignment subunit, wherein:
the node management subunit is configured to wake up the standby node, and receive a network join request message sent by the standby node;
the identifier assignment subunit is configured to, assign a node identifier to the standby node after the node management subunit receives the network join request message sent by the standby node, wherein the assigned node identifier makes the standby node share with the target area bearers in an address space of the target area after the standby node joins the network, so as to decompose a load in the target area.
Preferably, the load control unit comprises: a node management subunit and an identifier assignment subunit, wherein:
the node management subunit is configured to select from a network area outside the target area one or more nodes whose loads are lower than a reference load in the target area, or one or more nodes whose loads are less than a first load threshold, notify the selected node to re-join the network, and receive a network join request message sent by the selected node;
the identifier assignment subunit is configured to assign a node identifier to the selected node after the node management subunit receives the network join request message sent by the standby node, wherein the assigned node identifier makes the selected node share with the target area the bearers in the address space of the target area after the selected node joins the network, so as to decompose the load in the target area.

The embodiment of the present document also provides another registration server, comprising: a load monitoring unit and the load control unit, wherein:
the load monitoring unit is configured to monitor a load in a target area;
the load control unit is configured to select a node from the target area when the load monitoring unit acquires that the load in the target area is lower than a third load threshold, and make the selected node exit from the target area.

Preferably, the load control unit comprises a node management subunit, wherein:
the node management subunit is configured to select a node from the target area, and notify the selected node to turn back into a standby node. To sum up, by adding reserved standby nodes into the target network or making the reserved standby node exit from the target network, or by the node identifier adjustment, the embodiments of the present document control the load in the P2P network without reducing the connection rate in the P2P network.

### Brief Description of the Drawings

FIG. 1 is an architectural diagram of a P2P core network in the related art;
FIG. 2 is a flow chart of a network overload control method in the related art;
FIG. 3 ∼ FIG. 5 are flow charts of a network load control method in accordance with an embodiment of the present document;
FIG. 6 is an architectural diagram of a registration server in accordance with an embodiment of the present document.

### Preferred Embodiments of the Invention

In this embodiment, in the P2P network, the load control node senses that the load in the target area is higher than the second load threshold set by the operator, sends a message to notify the registration server, and requests to adjust the network load, the registration server adds a node into the target area; when the load control node's load in the target area is lower than the third load threshold, it requests to adjust the network load, and the registration server selects a node from the target area, and makes the selected node exit from the target area. The load control node can be a node currently having service in the P2P network, and herein, the node currently having service refers to an ordinary node in the P2P network, or a load balancing server, if the registration server collects the load control nodes, the load control node does not need to send a request message to the registration server to request to adjust the load, while the registered server adjusts directly.

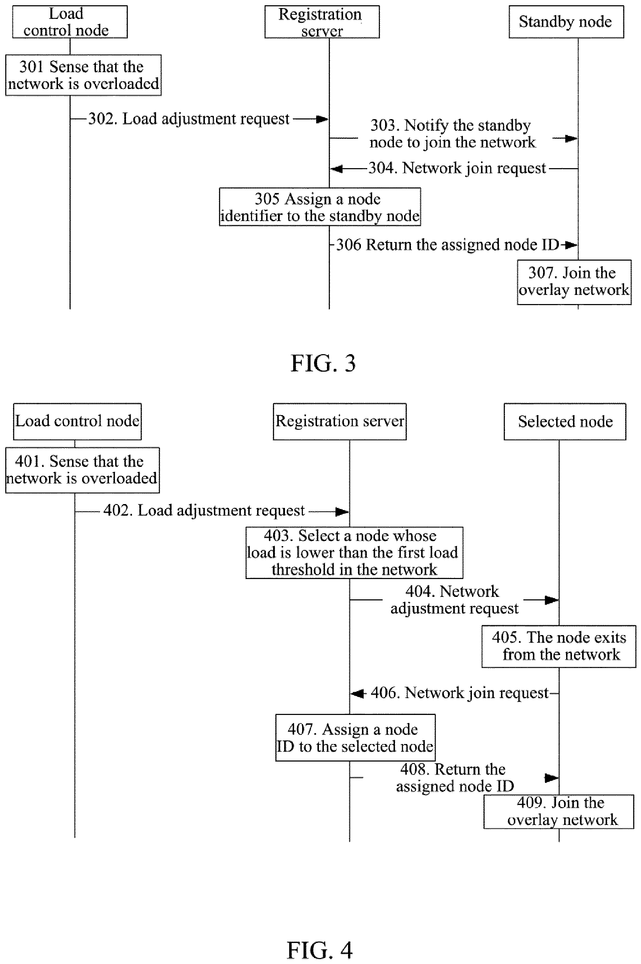

FIG. 3 shows a network load control method in accordance with the present embodiment, comprising:
In step 301, the load control node senses the target area, and judges whether the load in the target area is higher than the preset second load threshold to determine whether it needs to initiate a load adjustment, and if yes, it is to proceed to step 302;
the second load threshold aims at the average load or the peak load of a certain time period in the network.

The load control node is a node which is currently in service, or a load balancing server, or a functional unit arranged in the registration server, namely, the load control node and registration server are jointly arranged. In Step 302, the load control node sends a load adjustment request to the registration server, and in the request, notifies the registration server of the node identifiers of the nodes contained in the target area;
There are one or more nodes in the target area, and the load control node can record the node ID of a single node in the load adjustment request; and/or record the node identifier range in the load adjustment request, the node identifier range represents one node or a plurality of nodes with consecutive node identifiers. When two end node identifiers in tandem in the node identifier range are the same, it is indicated that nodes to which the end node identifiers point are the same one.

In Step 303, the registration server calls the standby node from a standby node pool, wakes up the called standby node, notifies the standby node to join the target area, so as to reduce the load in the target network area; the standby node is in an idle or dormant state, and monitors wake-up from the registration server, after hearing a wake-up from the registration server, enters into a working state, and sends a network join request message to the registration server.

In Step 304, the standby node starts up, and sends a network join request message to the registration server;
In step 305, the registration server receives the network join request message from the standby node, and assigns a node identifier (ID) to the standby node, and the assigned node ID makes the standby node share with the target area the bearer in the address space of the target area after joining the network, so as to decompose the load in the target area; the registration server determines the node identifier assigned to the standby node according to the node identifiers of the nodes contained in the target area.

The registration server uses different assignment ways of the network DHT algorithm to assign the node identifier.

In Step 306, the assigned node ID is returned to the standby node;
In Step 307, the standby node uses the assigned node ID to join the target area, so as to decompose the network load in the target area.

FIG. 4 is another implementation of the network load control method in accordance with the present embodiment, in this implementation, after the registration server receives a load adjustment request from the load control server, it selects a node with the lighter load and adjusts the node to the target area, comprising:
steps 401 to 402 are the same as steps 301 to 302;
in step 403, the registration server selects from a network area outside the target area one or more nodes whose loads are less than the reference load in the target area or one or more nodes whose loads are lower than the first load threshold;
when the target area comprises a plurality of nodes, the reference load is the average load or the minimum load of the nodes in the target area; when the target area contains one node, the reference load is the load of that contained node.

The registration server may inquire the load balancing server for the loads of the nodes in the network.

In Step 404, the registration server sends a network adjustment request message to the selected node, and informs the selected node to rejoin the network;
In Step 405, the selected node exits from the network;
In Step 406, the selected node sends the registration server a network join request message, and re-joins the network;
In step 407, the registration server receives the network join request message from the selected node, and assigns a node identifier to the selected node, the assigned node identifier makes the selected node share with the target area the bearer in the address space of the target area after joining the network, so as to decompose the load in the target area;
the registration server determines the node identifier to be assigned to the selected node based on the node identifiers of the nodes contained in the target area.

The registration server uses different assignment ways of the network (DHT) algorithm to assign the node identifiers.

In Step 408, the assigned node ID is returned to the selected node;
In Step 409, the selected node uses the assigned node ID to join the target area, so as to decompose the network load in the target area.

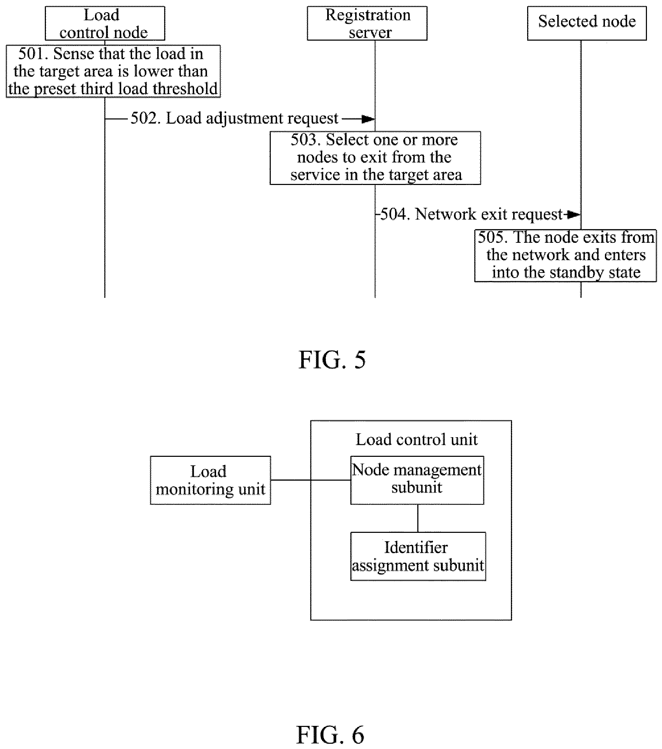

FIG. 5 is another example of the network load control method in accordance with the present embodiment, when the load control node senses that the load in the target area is relieved and lower than the third load threshold, it sends a network adjustment request to the registration server, and the registration server selects nodes to exit from the target area and degrade into standby nodes, comprising:
In Step 501, the load control node senses the target area, and it is to proceed to step 502 when the load in the target area is lower than the preset third load threshold;
the third load threshold aims to the average load of a certain time period in the network.

In Step 502, the load control node sends a load adjustment request to the registration server, and notifies the registration server of the node identifiers of the nodes contained in the target area in the request;
The target area contains one or more nodes, and the load control node can record the node ID of a single node in the load adjustment request; and/or record the node identifier range in the load adjustment request, the node identifier range represents one node or a plurality of nodes with consecutive node identifiers. When two end node identifiers in tandem in the node identifier range are the same, it is indicated that nodes to which the end node identifiers point are the same one.

In Step 503, the registration server selects one or more nodes in the target area to exit from the service, and enter into the standby mode;
In Step 504, the registration server sends a network exit request to the selected node;
In Step 505, the selected node exits from the network and enters into the standby state.

Herein, the standby state means that the node is in an idle or dormant state, and regularly monitors the activation request from the registration server.
As shown in FIG. 6, the present embodiment also provides a registration server, comprising: a load monitoring unit and the load control unit, wherein:
the load monitoring unit is configured to monitor the load in the target area;
the load control unit is configured to add the node into the target area after the load monitoring unit acquires that the target area is overloaded.

The load control unit is configured to call the standby node, and add the standby node into the target area, or select a node from a network area outside the target area, and add the selected node into the target area.

The load control unit comprises: a node management subunit and an identifier assignment subunit, wherein:
the node manager subunit is configured to wake up the standby node, and receive the network join request message sent by the standby node;
the identifier assignment subunit is configured to assign a node identifier to the standby node after the node management subunit receives the network join request message sent by the standby node, and the assigned node identifier makes the standby node share with the target area the bearer in the address space of the target area after joining the network, so as to decompose the load in the target area.

In another implementation, the node management subunit is configured to select from the network region outside the target area one or more nodes whose loads are less than the reference load in the target area, or one or more nodes whose loads are less than the first load threshold, and notify the selected node to re-join the network, and receive the network join request message sent by the selected node;
The identifier assignment subunit is configured to assign a node identifier to the selected node after the node management subunit receives the network join request message sent by the standby node, and the assigned node identifier makes the selected node share with the target area the bearer in the address space of the target area after joining the network, so as to decompose the load in the target area.

Another registration server in accordance with the present embodiment comprises: a load monitoring unit and a load control unit, wherein:
the load monitoring unit is configured to monitor the load in the target area;
the load control unit is configured to select a node from the target area when the load monitoring unit acquires that the load in the target area is less than the third load threshold, and make the selected node exit from the target area.

The load control unit comprises a node management subunit, wherein: the node management subunit is configured to select a node from the target area, and notify the selected node to turn back into a standby node.

Those ordinarily skilled in the art can understand that all or part of steps of the above-mentioned method may be completed by programs instructing the relevant hardware, and the programs may be stored in a computer-readable storage medium, such as read only memory, magnetic or optical disk. Optionally, all or part of the steps of the above-mentioned embodiments may also be implemented by using one or more integrated circuits. Accordingly, each module/unit in the above-mentioned embodiment may be realized in the form of hardware or software function module. The present document is not limited to any specific form of hardware and software combinations.

Of course, the present document may also have a variety of other embodiments, and those skilled in the art can make all kinds of corresponding changes and modifications in accordance with the present document, and these corresponding changes and modifications should belong to the scope of in the appended claims of the present document.

### Industrial Applicability

By adding the reserved standby node into the target network or making the reserved standby node exit from the target network, or by node identifier adjustment, the embodiments of the present document control the load in the P2P network without reducing the connection rate in the P2P network.

## Claims

1. A network overload control method, comprising:
after acquiring that a target area is overloaded (301), a registration server adding a node into the target area;
wherein, the step of adding the node into the target area comprises:
the registration server selecting a node from a network area outside the target area, and adding the selected node into the target area;
wherein, the step of selecting a node from a network area outside of the target area and adding the selected node into the target area, comprises:
the registration server selecting from a network area outside of the target area one or more nodes whose loads are less than a reference load in the target area, or one or more nodes whose loads are less than a first load threshold (403); the registration server notifying the selected node to re-join the network (303), and after receiving a network join request message sent by the selected node (304), assigning a node identifier to the selected node (305), and the assigned node identifier making the selected node share with the target area the bearers in the address space of the target area after the selected node joins the network, so as to decompose the load in the target area.

2. The method of claim 1, wherein, when the target area comprises a plurality of the nodes, the reference load is an average load or a minimum load of the nodes in the target area; when the target area contains one node, the reference load is a load of that node.

3. The method of claim 1, wherein, the step of the registration server acquiring that the target area is overloaded comprises:
a load control node judging whether the load in the target area is higher than a second load threshold, if yes, determining that a load adjustment needs to be initiated, and sending a load adjustment request to the registration server; or
when the load control node and the registration server are jointly arranged, the registration server sensing the load in the target area, and judging whether the load in the target area is higher than the second load threshold.

4. The method of claim 3, wherein, the target area comprises one or more nodes, and the load control node notifies the registration server of the node identifiers of the nodes contained in the target area in the load adjustment request;
preferably, wherein, the load control node notifying the registration server of the node identifiers of the nodes contained in the target area in the load adjustment request, comprises:
the load control node recording the node identifier of a single node in the load adjustment request;
the load control node recording a node identifier range in the load adjustment request, wherein the node identifier range represents one node or a plurality of nodes with consecutive node identifiers;
more preferably, wherein, when two end node identifiers in tandem in the node identifier range are the same, it is indicated that nodes to which the end node identifiers point are a same one.

5. The method of claim 1, wherein, the load control node is a node that is currently in service, or a load balancing server, or a functional unit arranged in the registration server.

6. A registration server, comprising: a load monitoring unit and a load control unit, wherein:
the load monitoring unit is configured to monitor a load in a target area;
the load control unit is configured to, after the load monitoring unit acquires that the target area is overloaded (301), add a node into the target area;
wherein,
the load control unit is configured to select a node from a network area outside the target area, and add the selected node into the target area;
wherein, the load control unit comprises: a node management subunit and an identifier assignment subunit, wherein:
the node management subunit is configured to select from a network area outside the target area one or more nodes whose loads are lower than a reference load in the target area, or one or more nodes whose loads are less than a first load threshold (403), notify the selected node to re-join the network (303), and receive a network join request message sent by the selected node (304); the identifier assignment subunit is configured to assign a node identifier to the selected node after the node management subunit receives the network join request message sent by the selected node (305), wherein the assigned node identifier makes the selected node share with the target area the bearers in the address space of the target area after the selected node joins the network, so as to decompose the load in the target area.

## Patentansprüche

1. Netzwerkbelastungssteuerungsverfahren, umfassend:
nach dem Erfassen, dass ein Zielbereich überlastet (301) ist, das Hinzufügen eines Knotens zu dem Zielbereich durch einen Registrierungsserver;
wobei der Schritt des Hinzufügens des Knotens zu dem Zielbereich umfasst:
Auswählen durch den Registrierungsserver von einem Knoten aus einem Netzwerkbereich außerhalb des Zielbereichs und Hinzufügen des ausgewählten Knotens zu dem Zielbereich;
wobei der Schritt des Auswählens eines Knotens aus einem Netzwerkbereich außerhalb des Zielbereichs und des Hinzufügens des ausgewählten Knotens zu dem Zielbereich umfasst:
Auswählen durch den Registrierungsserver aus einem Netzwerkbereich außerhalb des Zielbereichs von einem oder mehreren Knoten, deren Lasten kleiner als eine Referenzlast in dem Zielbereich sind, oder von einem oder mehreren Knoten, deren Lasten kleiner als ein erster Lastschwellenwert sind (403);
Benachrichtigen des ausgewählten Knotens durch den Registrierungsserver, sich erneut in dem Netzwerk (303) anzumelden, und nach dem Empfang einer Netzwerkanmeldungsanforderungsnachricht, die von dem ausgewählten Knoten (304) gesendet wird, Zuweisen einer Knotenkennung zu dem ausgewählten Knoten (305), und wobei die zugewiesene Knotenkennung dafür sorgt, dass der ausgewählte Knoten die Träger in dem Adressraum des Zielbereichs mit dem Zielbereich teilt, nachdem der ausgewählte Knoten sich im Netzwerk angemeldet hat, um so die Last in dem Zielbereich aufzuteilen.

2. Verfahren nach Anspruch 1, wobei, wenn der Zielbereich eine Vielzahl der Knoten umfasst, die Referenzlast eine durchschnittliche Last oder eine Mindestlast der Knoten in dem Zielbereich ist; wenn der Zielbereich einen Knoten enthält, die Referenzlast eine Last dieses Knotens ist.

3. Verfahren nach Anspruch 1, wobei der Schritt des Erfassens durch den Registrierungsserver, dass der Zielbereich überlastet ist, umfasst:
einen Laststeuerknoten, der beurteilt, ob die Last in dem Zielbereich höher als ein zweiter Lastschwellenwert ist; falls ja, Bestimmen, dass eine Lastanpassung eingeleitet werden muss, und Senden einer Lastanpassungsanforderung an den Registrierungsserver; oder
wenn der Laststeuerknoten und der Registrierungsserver gemeinsam angeordnet sind, Feststellen der Last in dem Zielbereich durch den Registrierungsserver und Beurteilen, ob die Last in dem Zielbereich höher als der zweite Lastschwellenwert ist.

4. Verfahren nach Anspruch 3, wobei der Zielbereich einen oder mehrere Knoten umfasst und der Laststeuerknoten den Registrierungsserver über die Knotenkennungen der Knoten benachrichtigt, die in dem Zielbereich in der Lastanpassungsanforderung enthalten sind;
vorzugsweise, wobei der Laststeuerknoten den Registrierungsserver über die Knotenkennungen der Knoten benachrichtigt, die in dem Zielbereich in der Lastanpassungsanforderung enthalten sind, umfassend:
Aufzeichnen der Knotenkennung eines einzelnen Knotens in der Lastanpassungsanforderung durch den Laststeuerknoten;
wobei der Laststeuerknoten einen Knotenkennungsbereich in der Lastanpassungsanforderung aufzeichnet, wobei der Knotenkennungsbereich einen Knoten oder eine Vielzahl von Knoten mit aufeinanderfolgenden Knotenkennungen darstellt;
weiter bevorzugt, wobei, wenn zwei Endknotenkennungen nacheinander im Knotenkennungsbereich gleich sind, angegeben wird, dass Knoten, auf die die Endknotenkennung zeigt, dieselben sind.

5. Verfahren nach Anspruch 1, wobei der Laststeuerknoten ein Knoten, der aktuell in Betrieb ist, oder ein Lastausgleichsserver oder eine in dem Registrierungsserver angeordnete funktionale Einheit ist.

6. Registrierungsserver, umfassend: eine Lastüberwachungseinheit und eine Laststeuereinheit, wobei:
die Lastüberwachungseinheit konfiguriert ist, um eine Last in einem Zielbereich zu überwachen;
die Laststeuereinheit konfiguriert ist, nachdem die Lastüberwachungseinheit erfasst, dass der Zielbereich überlastet (301) ist, um einen Knoten zu dem Zielbereich hinzuzufügen;
wobei die Laststeuereinheit konfiguriert ist, um einen Knoten von einem Netzwerkbereich außerhalb des Zielbereichs auszuwählen und den ausgewählten Knoten zu dem Zielbereich hinzuzufügen;
wobei die Laststeuereinheit umfasst: eine Knotenverwaltungsuntereinheit und eine Kennungszuweisungsuntereinheit, wobei:
die Knotenverwaltungsuntereinheit konfiguriert ist, um aus einem Netzwerkbereich außerhalb des Zielbereichs einen oder mehrere Knoten auszuwählen, deren Lasten niedriger als eine Referenzlast in dem Zielbereich sind, oder einen oder mehrere Knoten, deren Lasten kleiner als ein erster Lastschwellenwert (403) sind, den ausgewählten Knoten zu benachrichtigen, sich erneut in dem Netzwerk (303) anzumelden und eine Netzwerkanmeldungsanforderungsnachricht zu empfangen, die von dem ausgewählten Knoten (304) gesendet wird;
die Kennungszuweisungsuntereinheit konfiguriert ist, um dem ausgewählten Knoten eine Knotenkennung zuzuweisen, nachdem die Knotenverwaltungsuntereinheit die Netzwerkanmeldungsanforderungsnachricht empfängt, die durch den ausgewählten Knoten (305) gesendet wurde, wobei die zugewiesene Knotenkennung dafür sorgt, dass der ausgewählte Knoten die Träger in dem Adressraum des Zielbereichs mit dem Zielbereich teilt, nachdem der ausgewählte Knoten sich im Netzwerk angemeldet hat, um so die Last im Zielbereich aufzuteilen.

## Revendications

1. Procédé de régulation d'une charge de réseau, comprenant l'étape suivante:
suite à l'identification qu'une zone cible est en surcharge (301), ajout, par un serveur d'enregistrement, d'un noeud dans la zone cible;
l'étape d'ajout du noeud dans la zone cible comprenant l'étape suivante:
sélection, par le serveur d'enregistrement, d'un noeud à partir d'une zone de réseau extérieure à la zone cible et ajout, par le serveur d'enregistrement, du noeud sélectionné dans la zone cible;
l'étape de sélection d'un noeud à partir d'une zone de réseau extérieure à la zone cible et d'ajout du noeud sélectionné dans la zone cible comprenant les étapes suivantes:
sélection, par le serveur d'enregistrement, à partir d'une zone de réseau extérieure à la zone cible, d'un ou de plusieurs noeuds dont les charges sont inférieures à une charge de référence dans la zone cible, ou d'un ou de plusieurs noeuds dont les charges sont inférieures à un premier seuil de charge (403);
notification, par le serveur d'enregistrement, au noeud sélectionné de réintégrer le réseau (303) et, suite à la réception d'un message de requête d'intégration au réseau envoyé par le noeud sélectionné (304), assignation, par le serveur d'enregistrement, d'un identifiant de noeud au noeud sélectionné (305), l'identifiant de noeud assigné faisant en sorte que le noeud sélectionné partage avec la zone cible les supports dans l'espace d'adressage de la zone cible suite à l'intégration du noeud sélectionné au réseau, de manière à décomposer la charge dans la zone cible.

2. Procédé selon la revendication 1, dans lequel, lorsque la zone cible comprend une pluralité de noeuds, la charge de référence est une charge moyenne ou une charge minimale des noeuds dans la zone cible; lorsque la zone cible contient un seul noeud, la charge de référence est une charge de ce noeud.

3. Procédé selon la revendication 1, dans lequel l'étape d'identification, par le serveur d'enregistrement, que la zone cible est en surcharge comprend les étapes suivantes:
évaluation, par un noeud de régulation de charge, si la charge dans la zone cible est supérieure ou non à un deuxième seuil de charge et, dans l'affirmative, détermination, par le noeud de régulation de charge, de la nécessité de déclencher un ajustement de charge et envoi, par le noeud de régulation de charge, d'une requête d'ajustement de charge au serveur d'enregistrement; ou
lorsque le noeud de régulation de charge et le serveur d'enregistrement sont conjoints, détection, par le serveur d'enregistrement, de la charge dans la zone cible et évaluation, par le serveur d'enregistrement, si la charge dans la zone cible est supérieure ou non au deuxième seuil de charge.

4. Procédé selon la revendication 3, dans lequel la zone cible comprend un ou plusieurs noeuds et le noeud de régulation de charge notifie au serveur d'enregistrement les identifiants de noeud des noeuds contenus dans la zone cible dans la requête d'ajustement de charge;
de préférence, l'étape de notification, par le noeud de régulation de charge, au serveur d'enregistrement des identifiants de noeud des noeuds contenus dans la zone cible dans la requête d'ajustement de charge comprenant les étapes suivantes:
consignation, par le noeud de régulation de charge, de l'identifiant de noeud d'un unique noeud dans la requête d'ajustement de charge;
consignation, par le noeud de régulation de charge, d'une plage d'identifiants de noeud dans la requête d'ajustement de charge, la plage d'identifiants de noeud représentant un seul noeud ou une pluralité de noeuds avec des identifiants de noeud consécutifs;
de préférence encore, lorsque deux identifiants de noeud d'extrémité en tandem dans la plage d'identifiants de noeud sont identiques, une indication étant donnée que des noeuds vers lesquels pointent les identifiants de noeud d'extrémité constituent un même noeud.

5. Procédé selon la revendication 1, dans lequel le noeud de régulation de charge est un noeud actuellement en service ou un serveur de répartition de charge ou une unité fonctionnelle agencée dans le serveur d'enregistrement.

6. Serveur d'enregistrement, comprenant: une unité de surveillance de charge et une unité de régulation de charge,
l'unité de surveillance de charge étant configurée pour surveiller une charge dans une zone cible;
l'unité de régulation de charge étant configurée pour, après que l'unité de surveillance de charge a identifié que la zone cible est en surcharge (301), ajouter un noeud dans la zone cible;
l'unité de régulation de charge étant configurée pour sélectionner un noeud à partir d'une zone de réseau extérieure à la zone cible et ajouter le noeud sélectionné dans la zone cible;
l'unité de régulation de charge comprenant: une sous-unité de gestion de noeud et une sous-unité d'assignation d'identifiant,
la sous-unité de gestion de noeud étant configurée pour sélectionner, à partir d'une zone de réseau extérieure à la zone cible, un ou plusieurs noeuds dont les charges sont inférieures à une charge de référence dans la zone cible, ou un ou plusieurs noeuds dont les charges sont inférieures à un premier seuil de charge (403), notifier au noeud sélectionné de réintégrer le réseau (303) et recevoir un message de requête d'intégration au réseau envoyé par le noeud sélectionné (304);
la sous-unité d'assignation d'identifiant étant configurée pour assigner un identifiant de noeud au noeud sélectionné après que la sous-unité de gestion de noeud a reçu le message de requête d'intégration au réseau envoyé par le noeud sélectionné (305), l'identifiant de noeud assigné faisant en sorte que le noeud sélectionné partage avec la zone cible les supports dans l'espace d'adressage de la zone cible suite à l'intégration du noeud sélectionné au réseau, de manière à décomposer la charge dans la zone cible.
